# EUROPÄISCHE PATENTSCHRIFT

(11) **EP 1 329 818 B1**
(45) Veröffentlichungstag und Bekanntmachung des Hinweises auf die Patenterteilung: **30.05.2007**
(21) Anmeldenummer: 01107284.0
(22) Anmeldetag: 23.03.2001
(51) Int. Cl.: G06F 17/30

(54) **Methode zum Auffinden von Dokumenten**
Method of retreiving documents
Procédé de récupérer des documents

(43) Veröffentlichungstag der Anmeldung: 23.07.2003
(73) Patentinhaber: SIEMENS AKTIENGESELLSCHAFT, 80333 München (DE)
(72) Erfinder: Werner, Lars, 34320 Soehrewald (DE)
(74) Vertreter: Berg, Peter

(56) Entgegenhaltungen:
- US-A- 5 748 954
- US-A- 5 864 863
- US-A- 5 974 455
- US-A- 6 112 203
- YUWONO B ET AL: "Search and ranking algorithms for locating resources on the World Wide Web" DATA ENGINEERING, 1996. PROCEEDINGS OF THE TWELFTH INTERNATIONAL CONFERENCE ON NEW ORLEANS, LA, USA 26 FEB.-1 MARCH 1996, LOS ALAMITOS, CA, USA,IEEE COMPUT. SOC, US, 26. Februar 1996 (1996-02-26), Seiten 164-171, XP010158912 ISBN: 0-8186-7240-4

## Beschreibung

Die Erfindung betrifft das Auffinden von Dokumenten in einem Bestand, in dem die Dokumente Verweise auf andere Dokumente enthalten.

Das als World Wide Web (WWW) bekannte System umfasst eine große Zahl von Dokumenten, die Verweise auf andere Dokumente enthalten, welche wiederum Verweise auf weitere Dokumente usw. enthalten können. Dokumente, die solche Verweise hinter Text- oder Bildobjekten verbergen, werden auch als Hypertext und die Verweise selbst als Hyperlinks bezeichnet. Üblicherweise werden die Hypertext-Dokumente des WWW in der Markierungssprache HTML codiert.

Um ein Dokument in diesem größten existierenden Bestand gleich formatierter Dokumente zu finden, sind seit einiger Zeit Suchmaschinen bekannt. Diese verproben in regelmäßigen Abständen die Dokumente und folgen den Hyperlinks. Dabei werden die Dokumente in einen Index eingetragen, der entweder aus den in der HTML angegebenen Indexbegriffen oder aus dem Text extrahierten Wörtern besteht. Ein Benutzer des WWW, der ein Dokument sucht, veranlaßt eine Absuchung eines solchen Index mit von ihm vorgegebenen Suchwörtern.
War diese Methode in der Anfangszeit des WWW noch gut brauchbar, so wird die Ergebnismenge nur dann handhabbar klein, wenn sehr spezielle Such- und Stichwörter verwendet werden können. Gerade unerfahrene Benutzer erhalten häufig entweder zu kleine oder zu große Ergebnismengen.

Demgemäß werden, ausgehend von den Such- und Stichwörtern, die Dokumente nach Relevanz geordnet angezeigt, wobei die Relevanz auch kommerzielle Bevorzugungen enthalten kann. Für die Bildung der Relevanz werden in der Regel die Häufigkeiten von Wörtern herangezogen, wie es bereits 1958 in dem Artikel 'The Automatic Creation of Literatur Abstracts' von H.P.Luhn, IBM Journal, P.159-165 vorgeschlagen wurde.

Dennoch besteht weiterhin Bedarf an einer verbesserten, auch ungeübten Benutzern zugänglichen Methode.

In der Patentschrift US 6167398 wird dazu vorgeschlagen, ausgehend von einem Referenzdokument zu jedem untersuchten Dokument einen Abstand mittels einer Abstandmetrik zu berechnen und dann, nach dem Durchsuchen einer vorgegebenen oder anderswie begrenzten Zahl von Dokumenten, diese mit Hilfe der bestimmten Abstände in eine Reihenfolge zu bringen. Dabei sollen mehrere unterschiedliche Abstandsmetriken gemeinsam benutzt werden. Nachteilig an dieser Lösung ist es, daß zunächst eine Menge von Dokumenten bereitgestellt wird und dann jedes der Dokumente bewertet wird. Es ist also weiterhin notwendig, mit einer Stichwort-Suchfrage zunächst eine Teilmenge der Dokumente zu bestimmen.

In der Patentschrift US 6,144,973 wird vorgeschlagen, bei der Suche nach Dokumenten im WWW die Verweise in einem Dokument danach zu bewerten, ob ein vorgegebener Grad an Ähnlichkeit mit dem ursprünglichen Dokument gegeben ist. Die Verweise werden entweder verwendet, wenn eine vorgegebene Schwelle überschritten ist; oder sie werden verworfen, wenn die Schwelle unterschritten ist. Parallelarbeit oder eine Anpassung an schon gefundene Dokumente ist nicht vorgesehen; das primäre Mittel zur Begrenzung der Zahl der abgerufenen Dokumente besteht darin, die Suchtiefe zu beschränken.

Die Erfindung hingegen beruht auf der Erkenntnis, daß der ermittelte Grad der Ähnlichkeit zweckmäßig dazu verwendet werden kann, die weitere Suche zu steuern und die zu durchsuchenden Verweise zu ordnen.

Es handelt sich also um eine Methode zum Durchsuchen eines Dokumentenbestands, in der Dokumente durch Verweise verknüpft sind. Eine Liste von Verweisen auf zu bearbeitende Dokumente ist nach Priorität sortiert. Das zu dem Eintrag der höchsten Priorität gehörige Dokument wird abgerufen, und von diesem Dokument wird der Abstand zu einer Dokumentenbasis bestimmt. Alle Verweise aus dem Dokument werden in die Liste der zu bearbeitenden Dokumente eingetragen, wobei als Priorität der Abstand des Dokuments zu Dokumentenbasis verwendet wird.

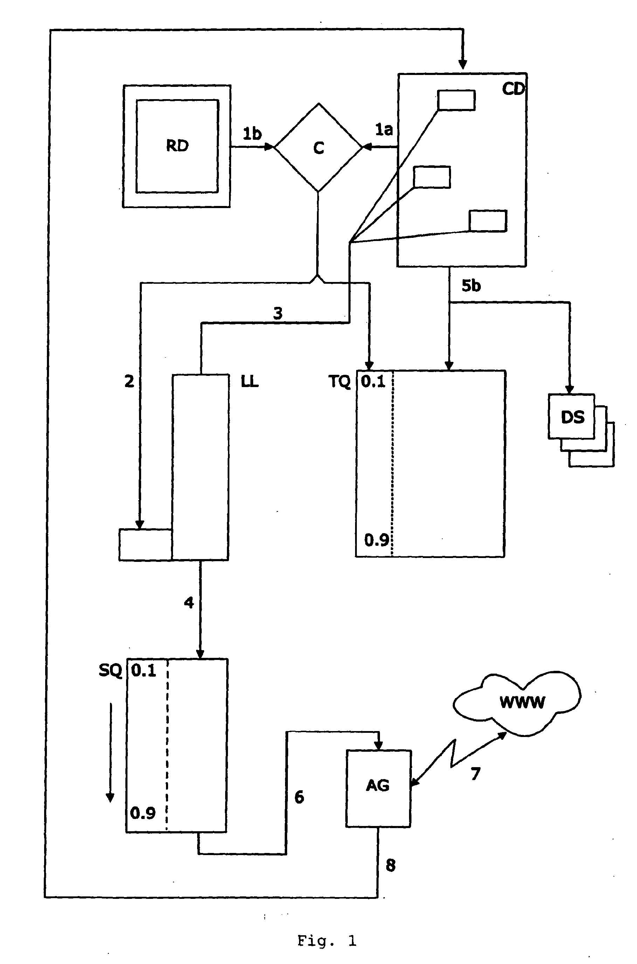

In Fig. 1 ist in einem Diagramm der prinzipielle Ablauf gezeigt.
Es werden zwei gewichtete Warteschlangen, die Quellschlange SQ und die Zielschlange TQ, verwendet. Diese werden in üblicher Technik, insbesondere durch Methoden in objektorientierter Programmierung, bereitgestellt. Im folgenden wird angenommen, daß das Gewicht eine Zahl zwischen 0 und 1 ist.

Die Quellschlange SQ umfaßt pro Eintrag mindestens ein Feld für das Gewicht, also eine Zahl zwischen 0 und 1, sowie einen Verweis auf das zu berücksichtigende Dokument, vorzugsweise als 'uniform resource locator' (URL, Verweis auf ein Dokument im WWW). Die Einträge in der Quellschlange sind stets so sortiert, daß in Richtung des Pfeile das Gewicht zunimmt und neue Einträge stets gemäß ihrem Gewicht einsortiert werden.

Die Zielschlange TQ ist ähnlich aufgebaut; auch sie enthält pro Eintrag ein Gewicht und einen Verweis auf ein Dokument, das hier als in einem Dokumentenspeicher DS befindlich dargestellt wird, da sich die Verweise stets auf abgerufene Dokumente beziehen. In dieser Zielschlange entsteht das Ergebnis der Methode gemäß der Erfindung.

Die Methode geht von einem Anfangsdokument aus, welches das aktuelle Dokument CD wird. Ferner ist eine Dokumentenbasis RD von einem oder mehreren Dokumenten vorhanden.

In dem ersten Schritt wird, mit 1a und 1b bezeichnet, sowohl das aktuelle Dokument CD als auch das bzw. die Referenzdokumente RD einem Vergleicher C zugeführt, der beispielsweise nach der Vektorraum-Methode einen Abstand des aktuellen Dokuments CD zu der Referenz RD bestimmt. Beispielsweise durch Bildung des Kehrwerts wird daraus ein Gewicht als Zahl zwischen 0 und 1 erzeugt, wobei ein großer Abstand zu einem kleinen Gewicht und umgekehrt führt.
In dem Schritt 2 wird das Gewicht für den Schritt 4 bereitgestellt.
Im Schritt 3 werden die Verweise aus dem aktuellen Dokument CD extrahiert und in einer Verweisliste LL gesammelt.
Im Schritt 4 wird die Verweisliste LL mit dem in Schritt 2 bereitgestellten Gewicht in die Quellschlange SQ übertragen. Alle in dem aktuellen Dokument enthaltenen Verweise werden also mit dem Gewicht des Dokuments, in dem sie enthalten sind, in die Quellschlange eingetragen.
In dem nächsten Schritt wird das aktuelle Dokument in die Zielliste TQ eingetragen, wobei das ermittelte Gewicht 5a und ein Verweis 5b darauf in die Zielliste eingetragen werden. Das aktuelle Dokument selbst wird bevorzugt in einen Dokumentenbestand DS abgelegt.
Als Schritt 6 ist dargestellt, daß der Verweis des höchsten Gewichts der Quellschlange SQ von einem Agenten AG entnommen wird und aus dem WWW abgerufen wird, was in Fig. 1 als Schritt 7 dargestellt ist. Ergebnis ist, als Schritt 8 dargestellt, ein Dokument, welches nunmehr das aktuelle Dokument CD wird und so iterativ die Methode angewendet wird.
Eine bevorzugt eingesetzte Verbesserung verwendet mehrere Agenten anstelle des in Fig. 1 dargestellten Agenten AG. Denn der Abruf eines Dokuments aus dem WWW kann erhebliche Zeit in Anspruch nehmen. Anstelle der einfachen Übertragung von Schritt 8 tritt dann eine (nicht gezeigte) Pufferschlange BQ, in der die abgerufenen Dokumente mit dem Gewicht eingeordnet werden, das die zugehörigen Verweise in der Quellschlange SQ hatten. Ist das jeweils aktuelle Dokument CD bewertet und abgelegt, so wird der Eintrag des dann höchsten Gewichts aus der Pufferschlange BQ als aktuellen Dokument betrachtet. In diesem Fall werden die Dokumente bevorzugt sogleich in den Dokumentenbestand DS eingetragen und in der Pufferschlange BQ nur noch die Verweise geführt.
Eine Parallelarbeit mit mehreren aktuellen Dokumenten CD ist möglich, insbesondere bei Maschinen mit mehreren Prozessoren.

Um Überläufe der Warteschlangen zu vermeiden, sind mehrere, dem Fachmann im Prinzip bekannte Maßnahmen möglich.
Die Pufferschlange BQ kann einfach mit fester Maximallänge gegeben sein. Ein Agent kann immer nur dann tätig werden, wenn ein Platz in der Pufferschlange BQ frei (geworden) ist. Bevorzugt wird die Anzahl der Agenten dynamisch so eingestellt, daß die Pufferschlange BQ stets teilgefüllt ist.

Für die Quellschlange SQ besteht eine Möglichkeit gleichfalls darin, auch deren Maximallänge vorzugeben. Ein neuer Eintrag bei voller Schlange wird entweder verworfen, wenn das Gewicht des neuen Eintrags kleiner ist als das des Eintrags mit dem geringsten Gewicht. Andernfalls wird letzterer verworfen und der neue Eintrag einsortiert.
Das gleiche Verfahren ist auch für die Zielschlange möglich. Alternativ oder gleichzeitig kann auch direkt nach der Bestimmung des Gewichts des aktuellen Dokuments entschieden werden, daß dessen Eintrag in die Zielschlange sowie seiner Verweise in die Quellschlange unterbleibt, wenn das Gewicht unter einer vorgegebenen Schranke liegt.

Bislang wird bei einem sehr großen Bestand wie dem WWW das Verfahren, wenn überhaupt, nur nach sehr langer Zeit zum Stillstand kommen. Einerseits kann die Zielschlange einem Benutzer regelmäßig zur Begutachtung dargestellt werden, so daß dieser das Verfahren abbrechen kann, wenn das Ergebnis seiner Ansicht nach ausreichend ist.
Eine andere Möglichkeit besteht darin, einen Mittelwert der Gewichte der in der Zielschlange gespeicherten Dokumente zu berechnen und das Verfahren abzubrechen, wenn dieser Mittelwert sich nach dem Hinzufügen einer vorgegebenen Anzahl von Dokumenten nicht mehr erhöht hat. Hat die Zielschlange TQ eine vorgegebene Maximallänge erreicht und werden, wie oben beschrieben, Dokumente geringen Gewichts verworfen, dann nimmt dieser Mittelwert ohnehin nur zu, so daß eine Stagnation als Abbruchkriterium dienen kann.
Sicherlich besteht auch die Möglichkeit, eine vorgegebene Schranke, wie oben dargestellt, für den Eintrag in die Quellschlange SQ zu verwenden. Dies wird dazu führen, daß die Quellschlange irgendwann leer ist und damit das Verfahren ohnehin beendet ist.

Da in der Dokumentenbasis des WWW zyklische Verweise häufig sind, wird bevorzugt eine Liste der bereits behandelten Verweise, in der Regel als Hash-Tabelle, geführt und ein Verweis aus einem Dokument bereits vor seinem Eintrag in die Verweisliste verworfen. Alternativ kann dies von den Agenten oder einem dafür vorgesehenen Prozeß übernommen werden.

Das Abstandsmaß kann nach dem Vektorraummodell berechnet werden. Dieses ist z.B. in "Introduction to Modern Information Retrieval" von Gerald Salton, McGraw Hill 1983, S.121-122, beschrieben. Hierbei wird zunächst eine Tabelle der Wörter aus den zu vergleichenden Dokumenten und ihrer Häufigkeit aufgestellt. Aus der Tabelle werden, in der Regel bereits bei deren Erstellung über sogenannte Stoppwort-Listen, die häufigen Wörter geringer Aussagekraft wie Artikel und Konjunktionen gestrichen. Weitere Maßnahmen sind der einschlägigen Literatur zu entnehmen. Die Zahlen der Häufigkeiten bilden für jedes Dokument einen n-dimensionalen Vektor, wobei n die Anzahl der berücksichtigten Wörter ist. Als Abstand zweier Dokumente wird nunmehr ein Skalarprodukt der beiden Vektoren verwendet. Wörter, die in nur einem Dokument vorkommen, tragen hierzu sinnvollerweise nichts bei und können auch vorab eliminiert werden. Als Skalarprodukt findet bevorzugt das "Cosinus-Maß" Verwendung, wie es in der o.a. Literatur beschrieben ist. Eine Übersicht hierüber findet sich auch in der Diplomarbeit "Visualisierung latent semantischer Hypertext-Strukturen" von Hardy Höfer, Univ. Paderborn, Dezember 1999, im Kapitel 4.3.

Die Erfindung wurde an Hand des WWW als Dokumentenbestand beschrieben, bei dem die Dokumente als HTML-Dokumente vorliegen, in denen die Verweise enthalten sind. Die Anwendung auf andere Dokumentenbestände ist ohne weiteres möglich, solange diese im Volltext vorliegen und miteinander verkettet sind. Diese Verkettung kann auch durch nicht im Dokument enthaltene Indizes erfolgen; ob die Verweise im Dokument selbst codiert oder in parallel geführten Indizes enthalten sind, spielt ersichtlich keine Rolle, solange die Adressierung des Dokuments im Index und umgekehrt eindeutig ist. Falls die Dokumente zwar nicht im Volltext vorliegen, aber einem der bekannten Klarschrift-Leseverfahren zugänglich sind, ist die Anwendung der Erfindung mehr eine Frage der Effizienz als des Prinzips, da die Dokumente automatisch dem Klarschrift-Leser zugeführt und die so erhaltenen Texte verwendet werden können. Dies trifft im übrigen im besonderen auch für Patentschriften zu, bei denen die Verweise auf andere Patentschriften leicht automatisch auffindbar sind, nachdem das Dokument von dem Klarschriftleser in Volltext gewandelt wurde. Abgesehen davon sind die Zitate der Patentschriften untereinander vollständig erfaßt und demgemäß ein Beispiel für den oben genannten externen Index.

## Patentansprüche

1. Methode zur Erstellung einer als Zielschlange verwendeten Liste von Dokumenten, deren Rangfolge in der Zielschlange durch ein mit einem vorgegebenen Verfahren ermittelten Gewicht bezüglich einer Dokumentenbasis bestimmt ist, wobei die zu untersuchenden Dokumente Verweise auf weitere Dokumente enthalten und wobei ein Anfangsdokument zu Beginn das aktuelle Dokument ist, mit den Schritten:
a. ein Bewerter ermittelt das Gewicht des aktuellen Dokuments bezüglich einer Dokumentenbasis und stellt einen Verweis auf das Dokument diesem Gewicht entsprechend in die Zielschlange ein,
b. die in dem aktuellen Dokument enthaltenen Verweise werden entnommen, erhalten das zuvor bestimmte Gewicht ihres Dokuments und
c. werden mit diesem Gewicht in eine nach dem Gewicht geordnete Quellschlange eingestellt,
d. wobei durch einen Agenten der Verweis höchsten Gewichts der Quellschlange entnommen, das zugehörige Dokument abgerufen und als aktuelles Dokument angesehen wird, woraufhin die Schritte a. - d. wiederholt werden.

2. Methode nach Anspruch 1, wobei mehrere Agenten jeweils einen Verweis des dann höchsten Gewichts der Quellschlange entnehmen, das Dokument abrufen, dann in eine Pufferschlange mit dem gleichen Gewicht wie ihn der Verweis hatte, einreihen und das Dokument jeweils höchsten Gewichts der Pufferschlange entnommen und als aktuelles Dokument angesehen wird.

3. Methode nach Anspruch 1 oder 2, wobei eine Liste der bereits verwendeten Verweise geführt wird und in dieser Liste enthaltene Verweise nicht erneut abgerufen und bewertet werden,' indem entweder solche Verweise nicht in der Quellschlange eingetragen oder bei der Entnahme des Verweises mit dem höchsten Gewicht verworfen werden.

4. Methode nach einem der Ansprüche 1 bis 3, wobei nur Verweise eines vorgegebenen Mindestgewichts in die Quellschlange eingetragen und ansonsten verworfen werden.

5. Methode nach einem der Ansprüche 1 bis 4, wobei nur Verweise eines vorgegebenen Mindestgewichts in die Zielschlange eingetragen und ansonsten verworfen werden.

6. Methode nach einem der Ansprüche 1 bis 5, wobei die Quellschlange eine vorgegebene Maximalzahl von Einträgen fasst und, wenn diese erreicht ist, ein Eintrag niedrigen Gewichts verworfen wird und ein Eintrag hohen Gewichts den Eintrag niedrigsten Gewichts verdrängt.

7. Methode nach einem der Ansprüche 1 bis 6, wobei die Zielschlange eine vorgegebene Maximalzahl von Einträgen fasst und, wenn diese erreicht ist, ein Eintrag niedrigen Gewichts verworfen wird und ein Eintrag hohen Gewichts den Eintrag niedrigsten Gewichts verdrängt.

## Claims

1. Method of creating a list of documents used as a target queue, the ranking of which in the target queue is determined by a weighting with respect to a document base which is calculated using a predetermined method, in which the candidate documents contain references to further documents and in which an initial document is the current document at the start, comprising the steps:
a. an evaluator calculates the weighting of the current document with respect to a document base and places a reference to said document in the target queue in accordance with said weighting,
b. the references contained in the current document are removed, receiving the previously determined weighting of their document, and
c. are placed together with said weighting in a source queue ranked according to the weighting,
d. wherein the reference having the highest weighting is removed from the source queue by an agent, the associated document is retrieved and treated as the current document, whereupon steps a.-d. are repeated.

2. Method according to Claim 1, in which a plurality of agents in each case remove from the source queue a reference then having the highest weighting, retrieve the document, then place the document in a buffer queue with the same weighting as the reference had, and the respective document having the highest weighting is removed from the buffer queue and is treated as the current document.

3. Method according to Claim 1 or 2, in which a list of already used references is maintained and references contained in said list are not retrieved and evaluated again, in that either such references are not entered in the source queue or are discarded during removal of the reference having the highest weighting.

4. Method according to one of Claims 1 to 3, in which only references having a predetermined minimum weighting are entered in the source queue and are otherwise discarded.

5. Method according to one of Claims 1 to 4, in which only references having a predetermined minimum weighting are entered in the target queue and are otherwise discarded.

6. Method according to one of Claims 1 to 5, in which the source queue holds a predetermined maximum number of entries and, when this number is reached, an entry having a low weighting is discarded and an entry having a high weighting displaces the entry having the lowest weighting.

7. Method according to one of Claims 1 to 6, in which the target queue holds a predetermined maximum number of entries and, when this number is reached, an entry having a low weighting is discarded and an entry having a high weighting displaces the entry having the lowest weighting.

## Revendications

1. Procédé pour établir une liste, utilisée en tant que file cible, de documents, dont le classement dans la file cible est défini par un poids, déterminé par un procédé préétabli, rapporté à une base de documents, les documents à analyser comportant des renvois à d'autres documents et un premier document étant le document actuel au début, comportant les étapes :
a) Une personne chargée de l'évaluation détermine le poids du document actuel rapporté à une base de documents et règle un renvoi au document dans la file cible conformément à ce poids,
b) Les renvois figurant dans le document actuel sont prélevés, ils obtiennent le poids défini préalablement de leur document et
c) Ils sont mis par ce poids dans une file source classée selon le poids,
d) Un renvoi du poids le plus grand étant prélevé dans la file source par un agent, le document correspondant étant appelé et considéré comme étant le document actuel, et les étapes a) - d) sont répétées.

2. Procédé suivant la revendication 1, dans lequel plusieurs agents prélèvent dans la file source respectivement un renvoi du poids qui est alors le plus grand, appèlent le document, puis le rangent dans une file tampon avec le même poids que celui qu'avait le renvoi et le document respectivement du poids le plus grand étant prélevé dans la file tampon et étant considéré comme étant le document actuel.

3. Procédé suivant la revendication 1 ou 2, une liste des renvois déjà utilisés étant dressée et les renvois figurant dans cette liste n'étant ni appelés ni évalués de nouveau, par le fait que de tels renvois soit ne sont pas enregistrés dans la file source, soit sont rejetés lors du prélèvement du renvoi ayant le poids le plus grand.

4. Procédé suivant l'une des revendications 1 à 3, dans lequel seuls les renvois d'un poids minimal préétabli sont enregistrés dans la file source et sont rejetés sinon.

5. Procédé suivant l'une des revendications 1 à 4, seuls les renvois d'un poids minimal préétabli sont enregistrés dans la file cible et sont rejetés sinon.

6. Procédé suivant l'une des revendications 1 à 5, la file source prenant un nombre maximal d'enregistrements et, lorsque celui-ci est atteint, un enregistrement de poids petit étant rejeté et un enregistrement de poids grand évinçant l'enregistrement de poids le plus petit.

7. Procédé suivant l'une des revendications 1 à 6, la file cible prenant un nombre maximal préétabli d'enregistrements et, lorsque celui-ci est atteint, un enregistrement de poids petit étant rejeté et un enregistrement de poids grand évinçant l'enregistrement de poids le plus petit.
